# EUROPEAN PATENT SPECIFICATION

(11) **EP 4 207 446 B1**
(45) Date of publication and mention of the grant of the patent: **29.10.2025**
(21) Application number: 22867567.4
(22) Date of filing: 02.08.2022
(51) Int. Cl.: H01M 50/178, H01M 50/548, H01M 50/55, H01M 50/557, H01M 50/119, H01M 50/121, H01M 50/105, H01M 10/647, H01M 10/613, H01M 50/342

(54) **POUCH-SHAPED BATTERY CELL HAVING EASILY COOLABLE STRUCTURE AND MANUFACTURING METHOD THEREOF**
BEUTELARTIGE BATTERIEZELLE MIT LEICHT ZU KÜHLENDER STRUKTUR UND HERSTELLUNGSVERFAHREN DAFÜR
ÉLÉMENT DE BATTERIE DE TYPE POCHE À STRUCTURE FACILE À REFROIDIR ET SON PROCÉDÉ DE FABRICATION

(30) Priority: 09.09.2021 KR 20210120684
(43) Date of publication of application: 05.07.2023
(73) Proprietor: LG Energy Solution, Ltd., Seoul 07335 (KR)
(72) Inventor: CHOI, Kyu Hyun, Daejeon 34122 (KR); KONG, Jin Hak, Daejeon 34122 (KR); KANG, Jae Hyuk, Daejeon 34122 (KR)
(74) Representative: Plasseraud IP
(86) International application number: PCT/KR2022/011379
(87) International publication number: WO 2023/038298

(56) References cited:
- KR-A- 20110 054 705
- KR-A- 20120 066 970
- KR-A- 20120 085 540
- KR-A- 20150 045 240
- KR-A- 20170 042 155
- KR-A- 20170 042 155
- US-A1- 2007 287 063
- US-A1- 2018 241 028
- US-A1- 2018 331 336
- US-A1- 2019 363 314
- US-A1- 2021 098 815
- US-A1- 2021 167 437

## Description

### [Technical Field]

The present invention relates to a pouch-shaped battery cell having an easily coolable structure and a manufacturing method thereof, and more particularly to a pouch-shaped battery cell having an easily coolable structure configured such that each of opposite side surfaces of a pouch case is made of a metal material, thereby improving cooling efficiency, and such that gas is guided to a desired position when an event occurs, thereby improving safety, and a manufacturing method thereof.

### [Background Art]

With the remarkable development of information technology (IT), a great variety of portable information communication devices has been popularized. As a result, in the 21^{st} century, we are moving toward a ubiquitous society in which high-quality information service is possible regardless of time and place.

A lithium secondary battery is very important to realize such a ubiquitous society. Specifically, a lithium secondary battery, which can be charged and discharged, has been widely used as an energy source for wireless mobile devices. In addition, a lithium secondary battery has also been used as an energy source for electric vehicles and hybrid electric vehicles, which have been proposed to solve problems, such as air pollution, caused by existing gasoline and diesel vehicles using fossil fuel.

As the range of devices to which a lithium secondary battery is applicable has broadened, as described above, the lithium secondary battery has also been diversified such that the lithium battery cell can provide outputs and capacities suitable for devices to which the lithium secondary battery is applied. In addition, there is a strong need to reduce the size and weight of the lithium secondary battery.

Meanwhile, secondary batteries may be classified into a cylindrical battery, a prismatic battery, and a pouch-shaped battery cell. Thereamong, the pouch-shaped battery cell, which can be stacked with a high degree of integration, has high energy density per unit weight, is inexpensive, and is easily deformable, has attracted much attention.

The pouch-shaped battery cell is configured to have a structure in which an electrode assembly including a positive electrode, a negative electrode, and a separator is received in a battery case made of a laminate sheet together with an electrolytic solution and an outer periphery of the battery case is hermetically sealed by thermal fusion.

However, heat is inevitably generated from the pouch-shaped battery cell during charging and discharging thereof. Depending on circumstances, thermal runaway may occur due to short circuit, thermal impact, insulation breakdown, etc. This leads to a major accident, such as fire outbreak or explosion. For this reason, it is very important to cool the pouch-shaped battery cell.

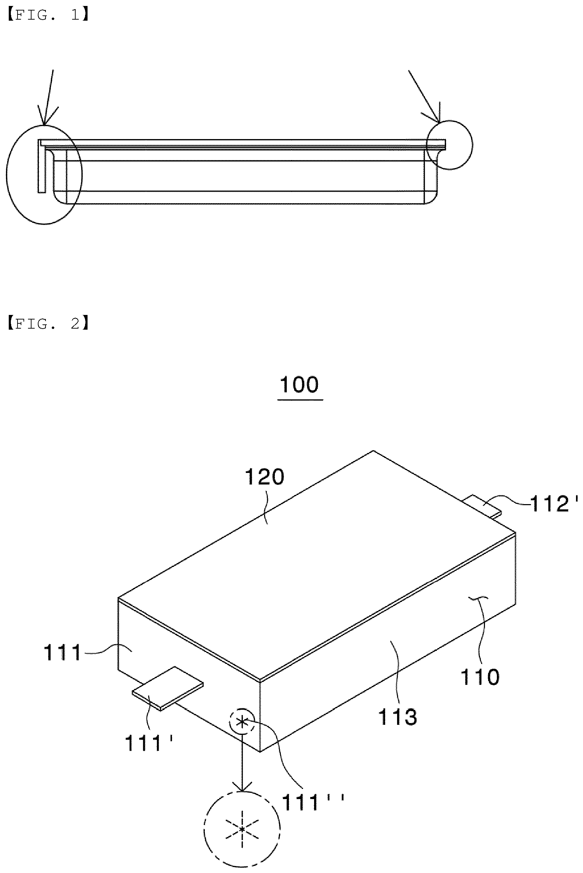

The pouch-shaped battery cell has a general external shape as shown in FIG. 1, wherein the pouch-shaped battery cell has a bat ear part (the right side of FIG. 1) and a folding part at which a terrace is folded (the left side of FIG. 1), and cooling through the folding part is impossible due to a structural problem thereof.

Meanwhile, when gas is continuously generated in the pouch-shaped battery cell due to overcurrent and overvoltage during charging and discharging of the battery cell, the electrode assembly in which current flows is not affected even though a sealed portion of one side of the battery case is open and thus the gas is discharged, whereby charging and discharging current continuously flows in the electrode assembly. As a result, gas may be continuously generated, and ignition or explosion of the battery may be caused due to an increase in temperature thereof. Furthermore, gas explosion may occur at a position that is not desired by a user, whereby the case may be broken.

### (Prior Art Document)

(Patent Document 1) Korean Patent Application Publication No. 10-1401230
Examples of a pouch-type battery cell are disclosed in documents US 2021/098815 A1 (disclosing the preamble of claim 1) and US 2019/363314 A1.

### [Disclosure]

### [Technical Problem]

The present invention has been made in view of the above problems, and it is an object of the present invention to provide a pouch-shaped battery cell having a structure that is capable of performing cooling through opposite side surfaces of the pouch-shaped battery cell and a manufacturing method thereof.

It is another object of the present invention to provide a pouch-shaped battery cell having a structure capable of discharging gas to a desired position or in a desired direction when an event occurs and a manufacturing method thereof.

### [Technical Solution]

The invention relates to a pouch-shaped battery cell according to claim 1. The pouch-shaped battery cell according to the invention may present one or more of the features of the dependent claims, in any technically feasible combination.

Also, in the pouch-shaped battery cell according to the present invention, one side of each of the electrode leads is located in the case, and the other side of each of the electrode leads protrudes outwards from the case.

Also, in the pouch-shaped battery cell according to the present invention, the pair of electrode leads may be located so as to face each other.

Also, in the pouch-shaped battery cell according to the present invention, the pair of electrode leads may be located so as to face the same direction.

Also, in the pouch-shaped battery cell according to the present invention, the case includes a lower case including a front plate, a rear plate, a bottom plate, and a pair of side plates and an upper case located at an upper part of the lower case.

Also, in the pouch-shaped battery cell according to the present invention, each of the front plate, the rear plate, the bottom plate, and the upper case is made of a plastic material, and each of the pair of side plates is made of a thermally conductive material.

Also, in the pouch-shaped battery cell according to the present invention, the thermally conductive material may include at least one of aluminum, magnesium, zinc, or copper.

Also, in the pouch-shaped battery cell according to the present invention, the plastic material may include at least one of polyethylene, polypropylene, polystyrene, polyethylene terephthalate, or polyvinyl chloride.

Also, in the pouch-shaped battery cell according to the present invention, the case may have a notch configured to be broken when the pressure in the case is equal to or higher than a predetermined pressure or when the temperature in the case is equal to or higher than a predetermined temperature.

In addition, the present invention provides a battery module having a plurality of pouch-shaped battery cells according to the present invention disposed therein, further comprising a cooling device located at each of the pair of side plates in tight contact therewith.

In addition, the present invention provides a pouch-shaped battery cell manufacturing method including a first step of preparing the electrode assembly and the lower case, a second step of receiving the electrode assembly in the lower case, and a third step of sealing the lower case having the electrode assembly received therein with an upper case.

Also, in the pouch-shaped battery cell manufacturing method according to the present invention, the lower case may include a front plate, a rear plate, a bottom plate, and a pair of side plates, the upper case may be located at an upper part of the lower case, and during the first step, injection molding may be performed such that one side of one of the electrode leads is located in the lower case and the other side of the one of the electrode leads protrudes outwards from the lower case.

Also, in the pouch-shaped battery cell manufacturing method according to the present invention, the second step may further include a step of connecting the electrode lead located in the lower case and one of the electrode tabs of the electrode assembly to each other by welding.

Also, in the pouch-shaped battery cell manufacturing method according to the present invention, the upper case may be made of a plastic material, and during the third step, the lower case and the upper case may be fixed to each other by plastic welding.

### [Advantageous Effects]

As is apparent from the above description, a pouch-shaped battery cell having an easily coolable structure according to the present invention and a manufacturing method thereof have a merit in that a side surface of a case is flat, whereby no thermally conductive resin is necessary, and each of opposite side surfaces of the case is made of a metal material, whereby the heat dissipation effect is excellent.

Also, in the pouch-shaped battery cell according to the present invention and the manufacturing method thereof, the external shape of the case is a hexahedral shape, whereby it is possible to minimize an unnecessary space when a plurality of battery cells is stacked, and therefore it is possible to increase energy density.

Furthermore, the pouch-shaped battery cell according to the present invention and the manufacturing method thereof have an advantage in that a notch is provided at the case, whereby it is possible to guide the discharge of gas to a desired position when an event occurs, and therefore it is possible to reduce a secondary accident risk.

### [Description of Drawings]

FIG. 1 is a sectional view of a conventional pouch-shaped battery cell.
FIG. 2 is a perspective view of a pouch-shaped battery cell according to a first preferred embodiment of the present invention.
FIG. 3 is an exploded perspective view of the pouch-shaped battery cell according to the first preferred embodiment of the present invention.
FIG. 4 is a sectional view of a lower case according to a first preferred embodiment of the present invention when viewed from above.
FIG. 5 is a perspective view of a pouch-shaped battery cell according to a second preferred embodiment of the present invention.
FIG. 6 is an exploded perspective view of the pouch-shaped battery cell according to the second preferred embodiment of the present invention.
FIG. 7 is a view showing an example of a battery module including the battery cell according to the first preferred embodiment of the present invention.
FIG. 8 is a view showing another example of the battery module including the battery cell according to the first preferred embodiment of the present invention.
FIG. 9 is a flowchart illustrating a method of manufacturing the battery cell according to the first preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a pouch-shaped battery cell having an easily coolable structure according to the present invention and a manufacturing method thereof will be described with reference to the accompanying drawings.

First, the pouch-shaped battery cell will be described.

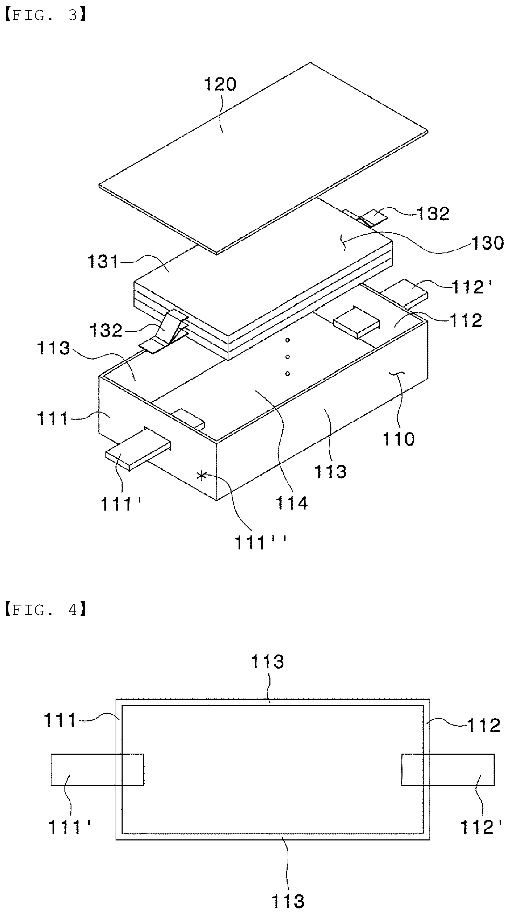

FIG. 2 is a perspective view of a pouch-shaped battery cell according to a first preferred embodiment of the present invention, FIG. 3 is an exploded perspective view of the pouch-shaped battery cell according to the first preferred embodiment of the present invention, and FIG. 4 is a sectional view of a lower case according to a first preferred embodiment of the present invention when viewed from above.

When describing the first preferred embodiment of the present invention with reference to FIGs. 2 to 4, the pouch-shaped battery cell 100 includes a lower case 110, an upper case 120, and an electrode assembly 130.

The lower case 110 is configured to have a cuboid shape constituted by a front plate 111, a rear plate 112, a pair of side plates 113, and a bottom plate 114, each of which is rectangular, and has defined therein a space configured to receive the electrode assembly.

A first electrode lead 111' and a second electrode lead 112' are disposed respectively at the front plate 111 and the rear plate 112 of the lower case 110 so as to face each other. Specifically, the first electrode lead 111', which is connected to one electrode tab 132 constituting the electrode assembly 130, is provided at the front plate 111, and the second electrode lead 112', which is connected to the other electrode tab 132 constituting the electrode assembly 130, is also provided at the rear plate 112.

Here, it is preferable for each of the front plate 111, the rear plate 112, and the bottom plate 114 to be made of a plastic material, and it is preferable for each of the side plates 113 to be made of a thermally conductive material.

More specifically, it is preferable for the material for each of the front plate 111, the rear plate 112, and the bottom plate 114 to be at least one of polypropylene, polyethylene, polystyrene, polyethylene terephthalate, and polyvinyl chloride, and polypropylene, which has the most moisture blocking effect, is more preferably used, although the material is not particularly restricted as long as the material is a plastic.

It is preferable for each of the side plates 113 to be made of a conductive material, such as at least one of aluminum, magnesium, zinc, and copper, and aluminum is more preferably used.

As previously described, the side surfaces of the conventional pouch case are not flat, whereby a separate thermally conductive resin must be applied thereto, and particularly it is impossible to cool one side surface of the pouch case at which the sealed portion is bent.

In the present invention, however, no thermally conductive resin is necessary since the side surfaces are flat. In addition, heat is dissipated through both the opposite side surfaces, and therefore the heat dissipation effect is excellent. Additionally, since the external shape of the case is a hexahedral shape, it is possible to minimize an unnecessary space when a plurality of battery cells is stacked, whereby it is possible to increase energy density.

Meanwhile, one side of each of the first electrode lead 111' and the second electrode lead 112' located respectively at the front plate 111 and the rear plate 112 is located in the case so as to be electrically connected to the electrode tab 132, and the other side of each of the first electrode lead and the second electrode lead protrudes outwards from the case so as to be connected to a busbar, etc.

A notch 111" of the front plate 111 is a construction configured to be broken preferentially when an event occurs, e.g. when gas is excessively generated, whereby pressure is increased to a predetermined level or higher or when temperature is increased. Gas may be discharged to a desired position through the notch 111", whereby it is possible to reduce a secondary accident risk when an event occurs.

Although one notch 111" is shown as being formed in the front plate 111 in the drawings, which, however, is merely an example, the notch may be provided at the rear plate 112, and the position and number of notches may be changed.

The upper case 120 is disposed at and fixed to an upper end of the lower case 110, i.e., an edge of the lower case 110, and also has a quadrangular flat plate shape. It is preferable for the upper case 120 to be made of the same material as the front plate 111 or the rear plate 112 of the lower case 110. The reason for this is that it is advantageous for plastic welding.

Next, the electrode assembly 130, which is received in the lower case 110, will be described. The electrode assembly 130 includes a stack 131 having a separator interposed between a positive electrode and a negative electrode and an electrode tab 132 protruding outwards from the stack by a predetermined length.

Specifically, the electrode assembly 130 may be a jelly-roll type electrode assembly, which is configured to have a structure in which a long sheet type positive electrode and a long sheet type negative electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto. The above electrode assembly is generally known, and therefore a more detailed description thereof will be omitted.

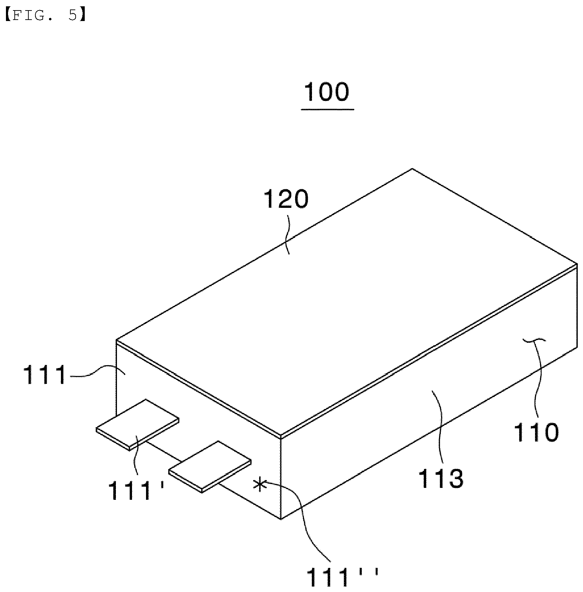

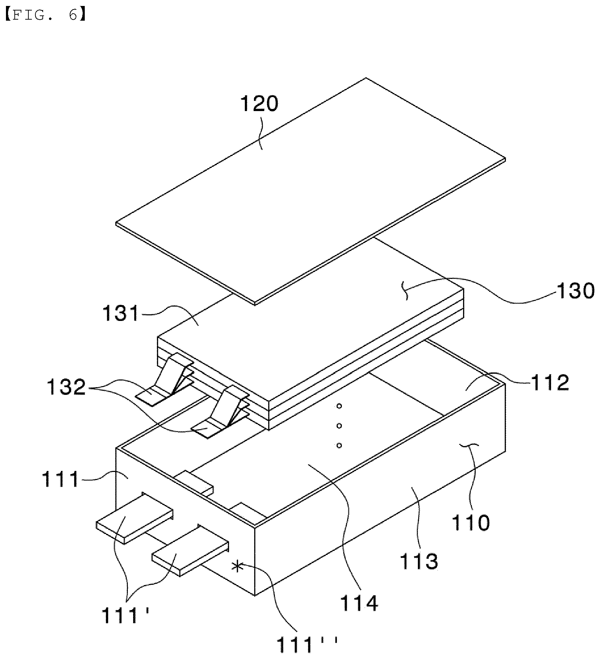

Next, a second preferred embodiment of the present invention will be described with reference to FIGs. 5 and 6.

FIG. 5 is a perspective view of a pouch-shaped battery cell according to a second preferred embodiment of the present invention, and FIG. 6 is an exploded perspective view of the pouch-shaped battery cell according to the second preferred embodiment of the present invention.

A lower case 110 according to a second preferred embodiment of the present invention includes a front plate 111, a rear plate 112, a bottom plate 114, and a pair of side plates 113. In particular, a pair of electrode leads 111' is provided at only the front plate 111. Consequently, a pair of electrode tabs 132 of an electrode assembly 130 is disposed in one direction.

Here, the material for each of the front plate 111, the rear plate 112, the bottom plate 114, the upper case 120, and the pair of side plates 113 is identical to that in the first embodiment described above, and a detailed description thereof will be omitted.

Next, a battery module including the battery cell according to the first preferred embodiment of the present invention will be described.

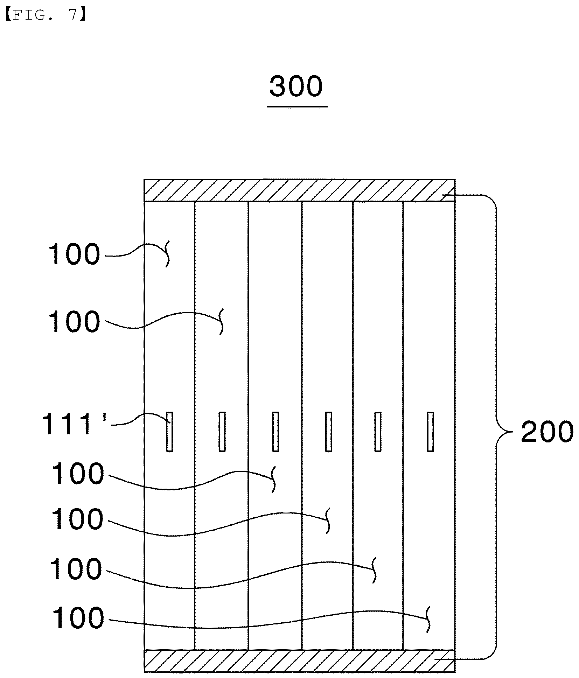

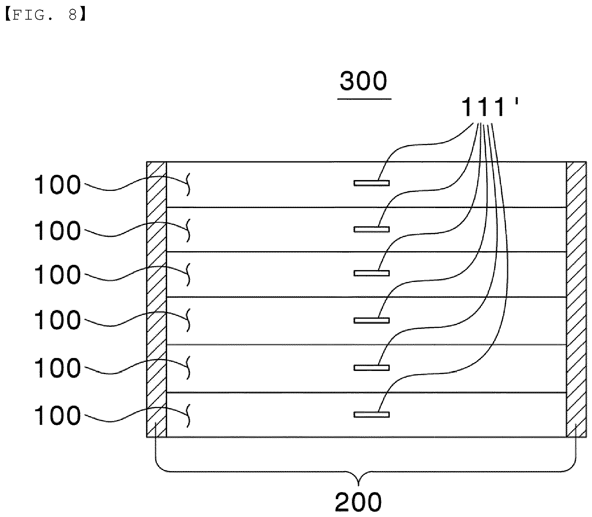

FIG. 7 is a view showing an example of a battery module including the battery cell according to the first preferred embodiment of the present invention, and FIG. 8 is a view showing another example of the battery module including the battery cell according to the first preferred embodiment of the present invention.

As shown in FIG. 7, a plurality of battery cells 100 is located side by side in a vertical direction. In this case, a cooling device 200 may be disposed at each of an upper part and a lower part of the battery cells 100 so as to be brought into tight contact with a corresponding one of the side plates of each of the battery cells.

In addition, as shown in FIG. 8, a plurality of battery cells 100 is located side by side in a horizontal direction. In this case, a cooling device 200 may be disposed at each of opposite side surfaces of the battery cells 100 so as to be brought into tight contact with a corresponding one of the side plates of each of the battery cells.

Here, it is obvious that a known cooling device, such as a heat sink, a cooling plate, or a cooling duct, may be used as the cooling device 200.

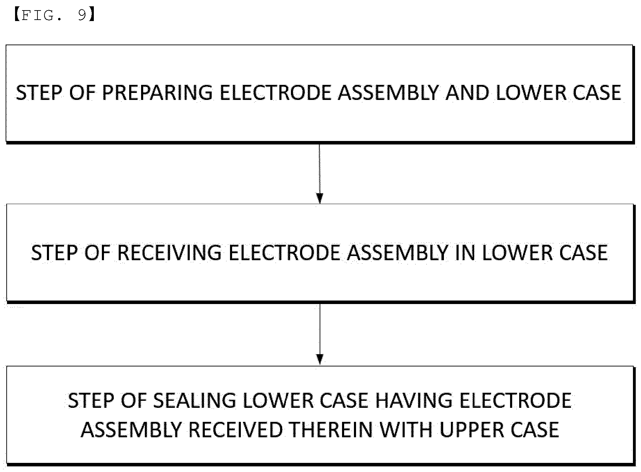

Next, a method of manufacturing the battery cell according to the first embodiment will be described. FIG. 9 is a flowchart illustrating a method of manufacturing the battery cell according to the first preferred embodiment of the present invention.

The battery cell manufacturing method according to the present invention includes a first step of preparing an electrode assembly and a lower case, a second step of receiving the electrode assembly in the lower case, and a third step of sealing the lower case having the electrode assembly received therein with an upper case.

Specifically, in the first step of preparing the electrode assembly and the lower case, a front plate and a rear plate of the lower case are prepared through a double injection method (insert injection) such that electrode tabs are integrated therewith, and side plates, each of which is made of a metal material, are separately prepared. Of course, a bottom plate and an upper case are also prepared.

Here, the front plate, the rear plate, and the bottom plate may be simultaneously prepared. In this case, bending is performed at each interface thereof.

The front plate, the rear plate, the bottom plate, and the pair of side plates thus prepared are connected to each other so as to form a space in the state in which only an upper part is open. Preferably, a plastic welding method is used.

Of course, the present invention is not limited to the above method, and the entirety of the lower case may be prepared using a known double injection method, such as insert injection.

In the second step of receiving the electrode assembly in the lower case, the electrode assembly is received in the space of the lower case. At this time, electrode leads protruding into the space of the lower case and electrode tabs of the electrode assembly are connected to each other by a known means, such as welding.

Finally, in the third step of sealing the lower case having the electrode assembly received therein with the upper case, welding, preferably plastic welding, may be performed; however, the present invention is not limited thereto.

Meanwhile, a notch 111" of the front plate 111 may be separately formed after the front plate 111 is completed or may be formed simultaneously with the front plate at the time of double injection.

Additionally, since it is necessary to secure the sealability between the upper case 120 and the lower case 110, a coating layer may be formed on upper and lower side surfaces including a junction region using a known coating agent that exhibits excellent flame resistance or moisture blocking ability in order to improve safety and to increase moisture blocking force after plastic welding. Of course, it is obvious that a coating layer may be formed on the lower case after insert injection.

Those skilled in the art to which the present invention pertains will appreciate that various applications and modifications are possible within the category of the present invention as defined by the appended claims.

### (Description of Reference Numerals)

100: Battery cell
110: Lower case
111: Front plate
111': First electrode lead
111": Notch
112: Rear plate
112': Second electrode lead
113: Side plate
114: Bottom plate
120: Upper case
130: Electrode assembly
131: Stack
132: Electrode tab
200: Cooling device
300: Battery module

## Claims

1. A pouch-shaped battery cell (100) comprising:
an electrode assembly (130) having a pair of electrode tabs (132) connected thereto;
a case (110, 120) configured to receive the electrode assembly (130); and
a pair of electrode leads (111', 112') connected respectively to the pair of electrode tabs (132) of the electrode assembly (130), the pair of electrode leads (111', 112') being fixed to the case (110, 120),
wherein one side of each of the electrode leads (111', 112') is located in the case and the other side of each of the electrode leads protrudes outwards from the case (110, 120),
wherein the case (110, 120) comprises:
a lower case (110) comprising a front plate (111), a rear plate (112), a bottom plate (114), and a pair of side plates (113); and
an upper case (120) located at an upper part of the lower case (110),
**characterized in that** each of the front plate (111), the rear plate (112), the bottom plate (114), and the upper case (120) is made of a plastic material and each of the pair of side plates (113) is made of a thermally conductive material.

2. The pouch-shaped battery cell (100) according to claim 1, wherein the pair of electrode leads (111', 112') is located so as to face each other.

3. The pouch-shaped battery cell (100) according to claim 1, wherein the pair of electrode leads (111', 112') is located so as to face the same direction.

4. The pouch-shaped battery cell (100) according to any one of claims 1 to 3, wherein the thermally conductive material comprises at least one of: aluminum, magnesium, zinc, or copper.

5. The pouch-shaped battery cell (100) according to any one of claims 1 to 4, wherein the plastic material comprises at least one of: polyethylene, polypropylene, polystyrene, polyethylene terephthalate, or polyvinyl chloride.

6. The pouch-shaped battery cell (100) according to any one of claims 1 to 5, wherein the case (110, 120) has a notch (111") configured to be broken when a pressure in the case (110, 120) is equal to or higher than a predetermined pressure or when a temperature in the case (110, 120) is equal to or higher than a predetermined temperature.

7. A battery module (300) having a plurality of pouch-shaped battery cells (100) according to any one of claims 1 to 6 disposed therein, further comprising a cooling device (200) located at each of the pair of side plates (113) in tight contact therewith.

8. A method of manufacturing the pouch-shaped battery cell (100) according to any one of claims 1 to 6, the method comprising:
a first step of preparing the electrode assembly (130) and the lower case (110);
a second step of receiving the electrode assembly (130) in the lower case (120); and
a third step of sealing the lower case (110) having the electrode assembly (130) received therein with an upper case (120).

9. The method according to claim 8, wherein the second step further comprises a step of connecting the electrode lead (111', 112') located in the lower case (110) and one of the electrode tabs (132) of the electrode assembly (130) to each other by welding.

10. The method according to claim 8 or 9, wherein
the upper case (120) is made of a plastic material, and
during the third step, the lower case (110) and the upper case (120) are fixed to each other by plastic welding.

## Patentansprüche

1. Beutelförmige Batteriezelle (100), umfassend:
eine Elektrodenanordnung (130), welche ein damit verbundenes Paar von Elektrodenstreifen (132) aufweist;
ein Gehäuse (110, 120), welches dazu eingerichtet ist, die Elektrodenanordnung (130) aufzunehmen; und
ein Paar von Elektrodenleitungen (111', 112'), welche jeweils mit dem Paar von Elektrodenstreifen (132) der Elektrodenanordnung (130) verbunden sind, wobei das Paar von Elektrodenleitungen (111', 112') an dem Gehäuse (110, 120) fixiert ist,
wobei eine Seite von jeder der Elektrodenleitungen (111', 112') in dem Gehäuse angeordnet ist und die andere Seite von jeder der Elektrodenleitungen von dem Gehäuse (110, 120) nach außen hervorsteht, wobei das Gehäuse (110, 120) umfasst:
ein unteres Gehäuse (110), welches eine vordere Platte (111), eine hintere Platte (112), eine Bodenplatte (114) und ein Paar von Seitenplatten (113) umfasst; und
ein oberes Gehäuse (120), welches an einem oberen Teil des unteren Gehäuses (110) angeordnet ist,
**dadurch gekennzeichnet, dass** jedes aus der vorderen Platte (111), der hinteren Platte (112), der Bodenplatte (114) und dem oberen Gehäuse (120) aus einem Kunststoffmaterial hergestellt ist und jede aus dem Paar von Seitenplatten (113) aus einem thermisch leitfähigen Material hergestellt ist.

2. Beutelförmige Batteriezelle (100) nach Anspruch 1, wobei das Paar von Elektrodenleitungen (111', 112') angeordnet ist, um sich gegenseitig zugewandt zu sein.

3. Beutelförmige Batteriezelle (100) nach Anspruch 1, wobei das Paar von Elektrodenleitungen (111', 112') angeordnet ist, um der gleichen Richtung zugewandt zu sein.

4. Beutelförmige Batteriezelle (100) nach einem der Ansprüche 1 bis 3, wobei das thermisch leitfähige Material wenigstens eines umfasst, aus: Aluminium, Magnesium, Zink oder Kupfer.

5. Beutelförmige Batteriezelle (100) nach einem der Ansprüche 1 bis 4, wobei das Kunststoffmaterial wenigstens eines umfasst, aus: Polyethylen, Polypropylen, Polystyrol, Polyethylenterephthalat oder Polyvinylchlorid.

6. Beutelförmige Batteriezelle (100) nach einem der Ansprüche 1 bis 5, wobei das Gehäuse (110, 120) eine Einkerbung (111") aufweist, welche dazu eingerichtet ist, beschädigt zu werden, wenn ein Druck in dem Gehäuse (110, 120) gleich wie oder größer als ein vorbestimmter Druck ist oder wenn eine Temperatur in dem Gehäuse (110, 120) gleich wie oder größer als eine vorbestimmte Temperatur ist.

7. Batteriemodul (300), welches eine Mehrzahl beutelförmiger Batteriezellen (100) nach einem der Ansprüche 1 bis 6 darin angeordnet aufweist, ferner umfassend eine Kühlvorrichtung (200), welche an jeder aus dem Paar von Seitenplatten (113) in engem Kontakt damit angeordnet ist.

8. Verfahren zur Herstellung der beutelförmigen Batteriezelle (100) nach einem der Ansprüche 1 bis 6, wobei das Verfahren umfasst:
einen ersten Schritt eines Vorbereitens der Elektrodenanordnung (130) und des unteren Gehäuses (110);
einen zweiten Schritt eines Aufnehmens der Elektrodenanordnung (130) in dem unteren Gehäuse (120); und
einen dritten Schritt eines Abdichtens des unteren Gehäuses (110), welches die Elektrodenanordnung (130) darin aufgenommen aufweist, mit einem oberen Gehäuse (120).

9. Verfahren nach Anspruch 8, wobei der zweite Schritt ferner einen Schritt eines Verbindens der Elektrodenleitung (111', 112'), welche in dem unteren Gehäuse (110) angeordnet ist, und einen der Elektrodenstreifen (132) der Elektrodenanordnung (130) miteinander durch Schweißen.

10. Verfahren nach Anspruch 8 oder 9, wobei
das obere Gehäuse (120) aus einem Kunststoffmaterial hergestellt ist, und
während des dritten Schritts, das untere Gehäuse (110) und das obere Gehäuse (120) miteinander durch Kunststoffschweißen fixiert werden.

## Revendications

1. Une cellule de batterie en forme de pochette (100) comprenant :
un ensemble d'électrodes (130) comportant une paire de languettes d'électrode (132) connectées à celui-ci ;
un boîtier (110, 120) configuré pour recevoir l'ensemble d'électrodes (130) ; et
une paire de fils d'électrode (111', 112') connectée respectivement à la paire de languettes d'électrode (132) de l'ensemble d'électrodes (130), la paire de fils d'électrode (111', 112') étant fixée au boîtier (110, 120), dans lequel un côté de chacun des fils d'électrode (111', 112') est situé dans le boîtier et l'autre côté de chacun des fils d'électrode fait saillie vers l'extérieur du boîtier (110, 120),
dans lequel le boîtier (110, 120) comprend :
un boîtier inférieur (110) comprenant une plaque avant (111), une plaque arrière (112), une plaque inférieure (114) et une paire de plaques latérales (113) ; et
un boîtier supérieur (120) situé dans une partie supérieure du boîtier inférieur (110),
**caractérisé en ce que** chacun de la plaque avant (111), de la plaque arrière (112), de la plaque inférieure (114) et du boîtier supérieur (120) est fabriqué en matériau plastique et chacune de la paire de plaques latérales (113) est fabriquée en matériau thermoconducteur.

2. La cellule de batterie en forme de pochette (100) selon la revendication 1, dans laquelle la paire de fils d'électrodes (111', 112') est située de manière à se faire face.

3. La cellule de batterie en forme de pochette (100) selon la revendication 1, dans laquelle la paire de fils d'électrodes (111', 112') est disposée de manière à être orientée dans la même direction.

4. La cellule de batterie en forme de pochette (100) selon l'une quelconque des revendications 1 à 3, dans laquelle le matériau thermoconducteur comprend au moins l'un des éléments suivants : aluminium, magnésium, zinc ou cuivre.

5. La cellule de batterie en forme de pochette (100) selon l'une quelconque des revendications 1 à 4, dans laquelle le matériau plastique comprend au moins l'un des éléments suivants : polyéthylène, polypropylène, polystyrène, polyéthylène téréphtalate ou polychlorure de vinyle.

6. La cellule de batterie en forme de pochette (100) selon l'une quelconque des revendications 1 à 5, dans laquelle le boîtier (110, 120) comporte une encoche (111") configurée pour se rompre lorsque la pression dans le boîtier (110, 120) est égale ou supérieure à une pression prédéterminée ou lorsqu'une température dans le boîtier (110, 120) est égale ou supérieure à une température prédéterminée.

7. Module de batterie (300) comportant une pluralité de cellules de batterie en forme de pochette (100) selon l'une quelconque des revendications 1 à 6 disposées à l'intérieur, comprenant en outre un dispositif de refroidissement (200) situé au niveau de chacune de la paire de plaques latérales (113) en contact étroit avec celles-ci.

8. Procédé de fabrication de la cellule de batterie en forme de pochette (100) selon l'une quelconque des revendications 1 à 6, le procédé comprenant :
une première étape consistant à préparer l'ensemble d'électrodes (130) et le boîtier inférieur (110) ;
une deuxième étape consistant à recevoir l'ensemble d'électrodes (130) dans le boîtier inférieur (120) ; et
une troisième étape consistant à sceller le boîtier inférieur (110) dans lequel est logé l'ensemble d'électrodes (130) avec un boîtier supérieur (120).

9. Procédé selon la revendication 8, dans lequel la deuxième étape comprend en outre une étape consistant à relier entre eux par soudage le fil d'électrode (111', 112') situé dans le boîtier inférieur (110) et l'une des languettes d'électrode (132) de l'ensemble d'électrodes (130) .

10. Procédé selon la revendication 8 ou 9, dans lequel
le boîtier supérieur (120) est fabriqué en matériau plastique, et
au cours de la troisième étape, le boîtier inférieur (110) et le boîtier supérieur (120) sont fixés l'un à l'autre par soudage plastique.
